# EUROPÄISCHE PATENTSCHRIFT

(11) **EP 2 787 215 B1**
(45) Veröffentlichungstag und Bekanntmachung des Hinweises auf die Patenterteilung: **23.10.2019**
(21) Anmeldenummer: 14001227.9
(22) Anmeldetag: 02.04.2014
(51) Int. Cl.: F02P 5/15, F02D 13/02, F02N 19/00, F02D 41/14, F02D 35/02, F02N 3/02

(54) **Verfahren zum Betrieb eines Verbrennungsmotors**
Method for operating a combustion engine
Procédé destiné au fonctionnement d'un moteur à combustion interne

(30) Priorität: 04.04.2013 DE 102013005807
(43) Veröffentlichungstag der Anmeldung: 08.10.2014
(73) Patentinhaber: Andreas Stihl AG & Co. KG, 71336 Waiblingen (DE)
(72) Erfinder: Raffenberg, Michael, 70736 Fellbach (DE); Klatt, Clemens, 71364 Winnenden (DE)
(74) Vertreter: Reinhardt, Annette

(56) Entgegenhaltungen:
- DE-A1- 19 504 105
- DE-U1-202005 020 147
- US-A1- 2003 056 755

## Beschreibung

Die Erfindung betrifft ein Verfahren zum Betrieb eines Verbrennungsmotors der im Oberbegriff des Anspruchs 1 angegebenen Gattung.

Aus der DE 195 04 105 A1 ist ein Verbrennungsmotor bekannt, der eine Dekompressionseinrichtung aufweist. Diese bekannte Dekompressionseinrichtung wird beim Betätigen eines Seilzugstarters automatisch ausgelöst und dabei das Dekompressionsventil geöffnet. Das Dekompressionsventil schließt sich aufgrund des im Zylinder bei einer Verbrennung entstehenden Verbrennungsdrucks.

Aus der US 2003/056755 A1 ist ein Verfahren bekannt, welches ein Zurückschlagen der Kurbelwelle eines Verbrennungsmotors beim Start und beim Leerlauf vermeiden soll. Dabei wird der Zündzeitpunkt, der über eine Zündzeitpunktkurve gesteuert ist, geändert.

Die Zündung von Verbrennungsmotoren wird üblicherweise von einer Steuereinrichtung gesteuert. In einem Leerlaufdrehzahlbereich erfolgt die Zündung zu einem vergleichsweise späten Zündzeitpunkt. Im Leerlauf soll dadurch erreicht werden, dass die Drehzahl nicht übermäßig ansteigt, so dass sich eine konstante Leerlaufdrehzahl und nur geringe Drehzahlschwankungen im Leerlauf ergeben. Es hat sich allerdings gezeigt, dass bei bekannten Dekompressionsventilen der Verbrennungsdruck, der aufgrund des späten Zündzeitpunkts herrscht, nicht immer zuverlässig ausreicht, um das Dekompressionsventil zu schließen. Um sicherzustellen, dass das Dekompressionsventil von dem Verbrennungsdruck im Leerlauf zuverlässig geschlossen wird, müssen enge Toleranzen am Dekompressionsventil eingehalten werden, die zu einer aufwändigeren Herstellung des Dekompressionsventils führen.

Der Erfindung liegt die Aufgabe zugrunde, ein Verfahren zum Betrieb eines Verbrennungsmotors zu schaffen, mit dem auch ein einfach aufgebautes Dekompressionsventil zuverlässig geschlossen werden kann.

Diese Aufgabe wird durch ein Verfahren zum Betrieb eines Verbrennungsmotors mit den Merkmalen des Anspruchs 1 gelöst.

Um ein sicheres Schließen des Dekompressionsventils zu erreichen, ist vorgesehen, dass für mindestens einen Motorzyklus die Zündung zu einem Schließzündzeitpunkt erfolgt, der etwa 5° Kurbelwellenwinkel vor dem frühesten Zündzeitpunkt liegt, insbesondere mindestens etwa 5° Kurbelwellenwinkel vor dem frühesten Zündzeitpunkt liegt. Der früheste Zündzeitpunkt ist dabei der früheste nach der Leerlaufsteuerung des Zündzeitpunkts vorgesehene Zündzeitpunkt. Die Zündung wird demnach im Leerlaufdrehzahlbereich für mindestens einen Motorzyklus nach "früh" verstellt. Dabei kann eine Frühverstellung des Zündzeitpunkts für einen einzigen Motorzyklus ausreichend sein. Es kann jedoch auch vorgesehen sein, den Zündzeitpunkt für mehrere Motorzyklen, insbesondere für mehrere aufeinander folgende Motorzyklen nach "früh" zu verstellen, um sicherzustellen, dass mindestens eine ausreichend starke Verbrennung erfolgt, die zu einem sicheren Schließen des Dekompressionsventils führt. Die Leerlaufsteuerung kann einen vergleichsweise späten Zündzeitpunkt vorsehen, der sicherstellt, dass sich ein ruhiger Lauf des Motors im Leerlaufdrehzahlbereich ergibt und der ein Zurückschlagen des Motors, also einen Antrieb des Motors in Gegendrehrichtung, sicher verhindert. Der nach der Leerlaufsteuerung vorgesehene Zündzeitpunkt muss nicht auf den Schließdruck des Dekompressionsventils abgestimmt sein. In dem mindestens einen Motorzyklus, in dem die Zündung zu dem Schließzündzeitpunkt erfolgt, findet eine stärkere Verbrennung im Brennraum statt. Dadurch wird ein höherer Druck im Brennraum erreicht, der zu einem sicheren Schließen des Dekompressionsventils führt. Ein übermäßig aufwändiger Aufbau des Dekompressionsventils oder eine übermäßig genaue Fertigung des Dekompressionsventils ist dadurch nicht notwendig.

Das erfindungsgemäße Verfahren kann bei jedem Typ von Verbrennungsmotor mit einem Dekompressionsventil verwendet werden, z. B. bei einem konventionellen Verbrennungsmotor mit einem mechanischen Vergaser, bei einem Verbrennungsmotor mit elektronisch zuzumessender Kraftstoffmenge oder dgl. Motor. Insbesondere wird das erfindungsgemäße Verfahren angewendet bei Zweitaktmotoren mit Seilzugstarter oder elektrischem Starter.

Der Schließzündzeitpunkt liegt vorteilhaft um höchstens etwa 40° Kurbelwellenwinkel vor dem frühesten Zündzeitpunkt. Dadurch kann ein Rückschlag des Motors noch sicher vermieden werden. Der Schließzündzeitpunkt liegt vorteilhaft mindestens etwa 10° Kurbelwellenwinkel, insbesondere etwa 20° Kurbelwellenwinkel vor dem frühesten Zündzeitpunkt. Dadurch wird ein ausreichend hoher Verbrennungsdruck im Brennraum erreicht, so dass das Dekompressionsventil sicher schließt. Vorteilhaft wird der Zündzeitpunkt anhand der Leerlaufsteuerung auf 0° bis etwa 20° Kurbelwellenwinkel vor dem oberen Totpunkt bestimmt und der Schließzündzeitpunkt liegt etwa 25° bis etwa 50° Kurbelwellenwinkel vor dem oberen Totpunkt.

Der mindestens eine Motorzyklus, in dem die Zündung zum Schließzündzeitpunkt erfolgt, findet vorteilhaft während der ersten 100 Motorzyklen, insbesondere während der ersten 50 Motorzyklen nach dem Startvorgang statt. Mit dem Startvorgang ist dabei der Anwerfvorgang des Verbrennungsmotors bis zum Stattfinden der ersten Verbrennung im Brennraum gemeint. Nach der ersten Verbrennung wird der Verbrennungsmotor im Leerlauf betrieben, bis eine Beschleunigung aus dem Leerlaufdrehzahlbereich erfolgt.

Um sicherzustellen, dass zu dem mindestens einen Motorzyklus, in dem die Zündung zum Schließzündzeitpunkt erfolgt, eine starke Verbrennung stattfindet, ist vorteilhaft vorgesehen, dass diesem Motorzyklus mindestens ein Motorzyklus vorausgeht, zu dem keine Zündung erfolgt. Insbesondere gehen dem mindestens einen Motorzyklus, zu dem die Zündung zum Schließzündzeitpunkt erfolgt, mehrere Motorzyklen ohne Zündung voraus. Vorteilhaft wird der Verbrennungsmotor so lange zu dem Schließzündzeitpunkt gezündet, bis eine Verbrennung im Brennraum stattgefunden hat. Dadurch ist sichergestellt, dass das Dekompressionsventil geschlossen ist. Hierzu ist vorgesehen, dass ermittelt wird, ob nach einem Motorzyklus, in dem die Zündung zum Schließzündzeitpunkt erfolgt ist, eine Verbrennung im Brennraum erfolgt ist. Falls keine Verbrennung erkannt wurde, ist vorgesehen, dass die Zündung im nächsten Motorzyklus erneut zum Schließzündzeitpunkt erfolgt. Die Ermittlung, ob eine Verbrennung erfolgt ist, kann auf einfache Weise dadurch erfolgen, dass die Drehzahl der Kurbelwelle überwacht wird. Steigt die Drehzahl beim Abwärtshub des Kolbens stärker an, übersteigt also die Beschleunigung einen Grenzwert, so fand eine Verbrennung statt. Es kann jedoch auch vorgesehen sein, die Ermittlung, ob eine Verbrennung stattgefunden hat, über einen Drucksensor im Brennraum vorzunehmen. Es kann auch vorgesehen sein, zu überwachen, ob das Dekompressionsventil geschlossen ist und die Zündung zum Schließzündzeitpunkt so lange vorzunehmen, bis das Dekompressionsventil sich geschlossen hat.

Der Schließzündzeitpunkt kann ein fester, in der Steuereinrichtung abgespeicherter Zündzeitpunkt sein. Es kann jedoch auch vorgesehen sein, dass der Schließzündzeitpunkt ausgehend von einem nach der Leerlaufsteuerung vorgesehenen Zündzeitpunkt ermittelt wird. Beispielsweise kann der nach der Leerlaufsteuerung vorgesehene Zündzeitpunkt um eine in der Steuereinrichtung vorgegebene Anzahl von Winkelgraden Kurbelwellenwinkel nach "früh" verstellt werden. Der nach der Leerlaufsteuerung vorgesehene Zündzeitpunkt kann dabei der Zündzeitpunkt für den folgenden Motorzyklus oder ein Zündzeitpunkt eines vorangegangenen Motorzyklus sein. Die Steuereinrichtung kann vorsehen, die Leerlaufsteuerung zu dem oder den Motorzyklen, zu denen die Zündung zum Schließzündzeitpunkt erfolgt, auszusetzen. Die Steuereinrichtung nach der Leerlaufsteuerung kann jedoch auch übersteuert oder der vorgesehene Zündzeitpunkt auf einen früheren Zündzeitpunkt verschoben werden.

Die Leerlaufsteuerung steuert den Zündzeitpunkt vorteilhaft in Abhängigkeit der Drehzahl des Verbrennungsmotors. Dabei ist insbesondere vorgesehen, dass der Zündzeitpunkt bei steigender Drehzahl nach "spät" verstellt wird. Dadurch wird ein ruhiger Lauf des Verbrennungsmotors im Leerlauf mit geringen Drehzahlschwankungen erreicht. Es kann jedoch auch vorgesehen sein, dass die Leerlaufsteuerung den Zündzeitpunkt auf einen konstanten Zündzeitpunkt festlegt. Das Dekompressionsventil öffnet in einen Druckentlastungsraum. Der Druckentlastungsraum ist insbesondere die Umgebung oder der Innenraum eines Kurbelgehäuses des Verbrennungsmotors.

Ausführungsbeispiele der Erfindung werden im Folgenden anhand der Zeichnung erläutert. Es zeigen:
- Fig. 1: eine Seitenansicht eines Trennschleifers,
- Fig. 2: eine schematische Darstellung des Aufbaus des Antriebs des Trennschleifers aus Fig. 1,
- Fig. 3: einen schematischen Schnitt durch den Verbrennungsmotor des Trennschleifers aus Fig. 1,
- Fig. 4: ein schematisches Diagramm, das den Zündzeitpunkt in Abhängigkeit der Drehzahl angibt,
- Fig. 5: ein Diagramm, das den maximalen Druck im Brennraum und den Zündzeitpunkt für die ersten 50 Motorzyklen angibt,
- Fig. 6: ein Diagramm, das den Verlauf des Brennraumdrucks und den Zündzeitpunkt für den 29. Motorzyklus aus Fig. 5 angibt,
- Fig. 7: ein Diagramm, das den Verlauf des Brennraumdrucks und den Zündzeitpunkt für den 30. Motorzyklus des Diagramms aus Fig. 5 angibt,
- Fig. 8: einen Schnitt durch ein Dekompressionsventil,
- Fig. 9: ein Diagramm, das den maximalen Druck im Brennraum und den Zündzeitpunkt für die ersten 50 Motorzyklen für ein weiteres Ausführungsbeispiel an gibt,
- Fig. 10: ein Ablaufdiagramm, das den Ablauf des Verfahrens zeigt.

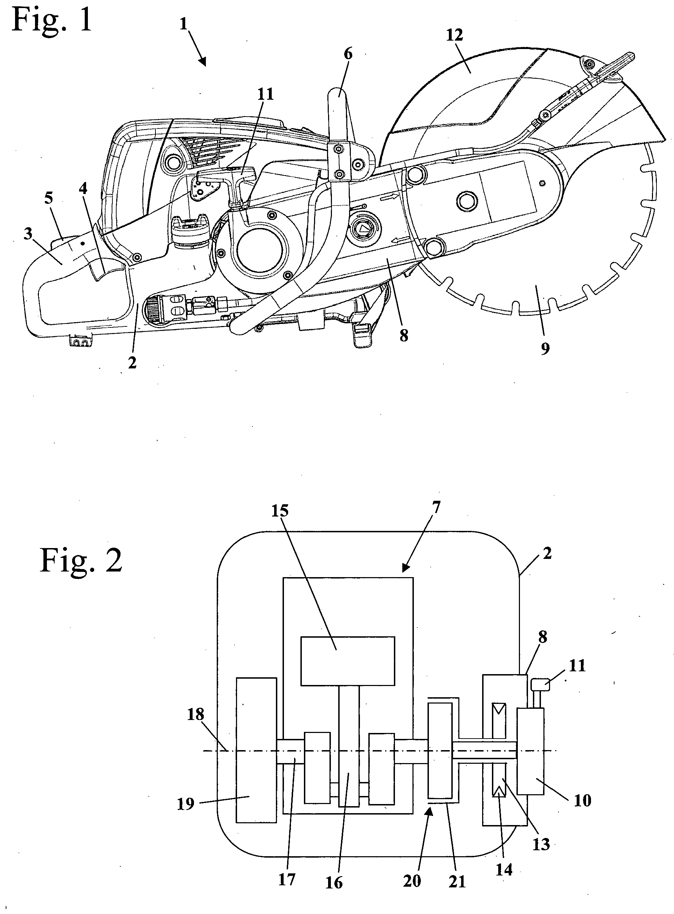

Fig. 1 zeigt als Ausführungsbeispiel für ein tragbares, handgeführtes Arbeitsgerät einen Trennschleifer 1. Das im Nachfolgenden noch näher beschriebene Verfahren zum Betrieb eines Verbrennungsmotors kann auch bei Verbrennungsmotoren für andere Einsatzgebiete, insbesondere bei Verbrennungsmotoren in anderen Arbeitsgeräten wie beispielsweise Motorsägen, Freischneidern, Blasgeräten, Sprühgeräten, Erntegeräten, Rasenmähern oder dergleichen eingesetzt werden. Der Trennschleifer 1 besitzt ein Gehäuse 2, an dem zwei Handgriffe zum Führen des Trennschleifers 1 im Betrieb, nämlich ein hinterer Handgriff 3 und ein Griffrohr 6 festgelegt sind. Am hinteren Handgriff 3 sind ein Gashebel 4 und eine Gashebelsperre 5 schwenkbar gelagert. An der dem hinteren Handgriff 3 abgewandt liegenden Seite des Gehäuses 2 ragt ein Ausleger 8 nach vorn, an dessen freiem Ende eine Trennscheibe 9 drehbar gelagert ist. Die Trennscheibe 9 ist über einen Teil ihres Umfangs von einer Schutzhaube 12 abgedeckt. Im Gehäuse 2 ist ein in Fig. 2 gezeigter Verbrennungsmotor 7 angeordnet. Die Trennscheibe 9 ist vom Verbrennungsmotor 7 rotierend angetrieben. Zum Starten des Verbrennungsmotors 7 dient eine in Fig. 2 schematisch gezeigte Anwerfvorrichtung 10, die einen Anwerfgriff 11 besitzt. Wie Fig. 1 zeigt, ragt der Anwerfgriff 11 aus dem Gehäuse 2 des Trennschleifers 1.

Der Verbrennungsmotor 7, der in Fig. 2 schematisch gezeigt ist, ist vorteilhaft ein Einzylindermotor, insbesondere ein gemischgeschmierter Motor, vorzugsweise ein Zweitaktmotor. Der Verbrennungsmotor 7 besitzt einen Kolben 15, der über ein Pleuel 16 eine Kurbelwelle 17 um eine Drehachse 18 rotierend antreibt. An der Kurbelwelle 17 ist ein Schwungrad 19 festgelegt. Das Schwungrad 19 kann als Lüfterrad ausgebildet sein und Lüfterflügel zur Förderung von Kühlluft für den Verbrennungsmotor 7 besitzen. An der dem Schwungrad abgewandt liegenden Seite des Verbrennungsmotors 7 ist an der Kurbelwelle 17 eine Fliehkraftkupplung 20 festgelegt. Die Fliehkraftkupplung 20 besitzt mit der Kurbelwelle 17 drehfest verbundene, nicht gezeigte Fliehgewichte, die mit einer Kupplungstrommel 21 zusammenwirken. Die Kupplungstrommel 21 ist mit einer Antriebsscheibe 13 drehfest verbunden, an der ein Antriebsriemen 14 angeordnet ist. Der Antriebsriemen 14 verläuft im Ausleger 8 und treibt die Trennscheibe 9 an. Wie Fig. 2 zeigt, ist die Anwerfvorrichtung 10 benachbart zur Antriebsscheibe 13 am Ausleger 8 angeordnet und wirkt auf die Kurbelwelle 16.

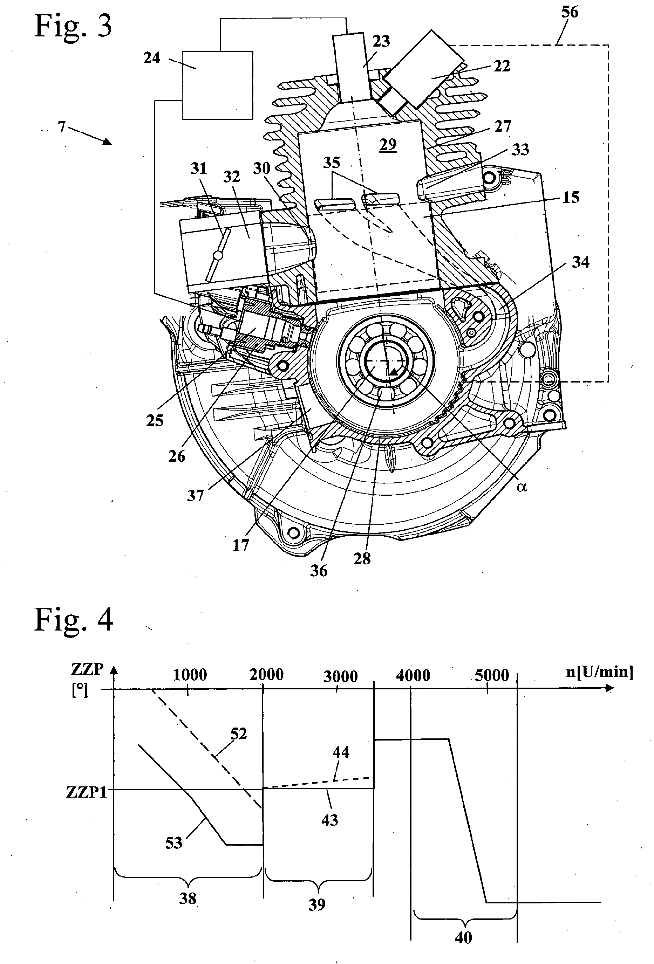

Fig. 3 zeigt den Aufbau des Verbrennungsmotors 7 im Einzelnen. Der Verbrennungsmotor 7 besitzt einen Zylinder 27, in den ein Dekompressionsventil 22 und eine Zündkerze 23 ragen. Die Ansteuerung der Zündkerze 23 erfolgt über eine Steuereinrichtung 24. Die Steuereinrichtung 24 steuert auch ein Kraftstoffventil 25, das im Ausführungsbeispiel an einem Kurbelgehäuse 28 des Verbrennungsmotors 7 angeordnet ist. Das Kraftstoffventil 25 führt Kraftstoff unter niedrigem Druck in den Innenraum des Kurbelgehäuses 28 zu. Der Innenraum des Kurbelgehäuses 28 ist über einen Überströmkanal 34 mit einem im Zylinder 27 ausgebildeten Brennraum 29 verbunden. Der Überströmkanal 34 teilt sich in mehrere, im Ausführungsbeispiel in vier Äste, die jeweils in einem Überströmfenster 35 in den Brennraum 29 münden. Auch eine andere Anzahl oder Gestaltung von einem oder mehreren Überströmkanälen 34 kann vorteilhaft sein.

Die Überströmfenster 35 sind von dem in Fig. 3 schematisch gezeigten Kolben 15 gesteuert. An der Zylinderbohrung mündet ein Ansaugkanal 32 mit einem ebenfalls vom Kolben 15 gesteuerten Einlass 30 ins Kurbelgehäuse 28. Der Ansaugkanal 32 ist im Bereich des oberen Totpunkts des Kolbens 15 mit dem Innenraum des Kurbelgehäuses 28 verbunden. Im Ansaugkanal 32 ist ein Drosselelement 31 angeordnet, das im Ausführungsbeispiel als schwenkbar gelagerte Drosselklappe ausgebildet ist. Aus dem Brennraum 29 führt ein ebenfalls vom Kolben 15 gesteuerter Auslass 33, an den sich vorteilhaft ein nicht gezeigter Auslass anschließt.

Wie Fig. 3 zeigt, ist das Kraftstoffventil 25 in einem Ventilhalter 26 angeordnet, der am Kurbelgehäuse 28 fixiert ist. Am Kurbelgehäuse 28 mündet außerdem eine Aufnahme 37 für weitere Bauteile. In der Aufnahme 37 kann beispielsweise eine Baueinheit aus Temperatursensor und Drucksensor angeordnet werden. Die Kurbelwelle 17 ist mit einem Lager 36 im Kurbelgehäuse 28 gelagert. Die Drehstellung der Kurbelwelle 17 wird über einen Kurbelwellenwinkel α beschrieben. Im oberen Totpunkt des Kolbens 15 beträgt der Kurbelwellenwinkel α 0° und in der in Fig. 3 schematisch gezeigten Stellung im unteren Totpunkt des Kolbens 15 beträgt der Kurbelwellenwinkel α 180°.

Im Betrieb des Verbrennungsmotors 7 wird im Bereich des oberen Totpunkts des Kolbens 15, also bei einem Kurbelwellenwinkel a von 0°, Verbrennungsluft in den Innenraum des Kurbelgehäuses 28 angesaugt. Der Verbrennungsluft wird Kraftstoff über das Kraftstoffventil 25 zudosiert, der aufgrund der rotierenden Teile im Kurbelgehäuseinnenraum zerstäubt und mit der Verbrennungsluft zu Kraftstoff/Luft-Gemisch aufbereitet wird. Das Gemisch im Innenraum des Kurbelgehäuses 28 wird beim Abwärtshub des Kolbens 15, also bei der Bewegung des Kolbens 15 in Richtung auf das Kurbelgehäuse 28, komprimiert und, sobald die Überströmfenster 35 vom Kolben 15 geöffnet werden, in den Brennraum 29 gedrückt. Beim anschließenden Aufwärtshub des Kolbens 15, also bei der Bewegung des Kolbens 15 in Richtung auf den Brennraum 29, wird das Kraftstoff/LuftGemisch im Brennraum 29 komprimiert und im Bereich des oberen Totpunkts des Kolbens 15 von der Zündkerze 23 gezündet. Beim daran anschließenden Abwärtshub des Kolbens 15 wird der Auslass 33 geöffnet, und die Abgase entweichen aus dem Brennraum 29.

Der Zündzeitpunkt ZZP wird in Abhängigkeit der Drehzahl n des Verbrennungsmotors 7 von der Steuereinrichtung 24 nach dem in Fig. 4 schematisch gezeigten Diagramm gesteuert. Der Zündzeitpunkt ZZP ist dabei als Kurbelwellenwinkel α vor dem oberen Totpunkt des Kolbens 15 angegeben. Je weiter unten ein Zündzeitpunkt im Diagramm dargestellt ist, umso früher bezogen auf den oberen Totpunkt des Kolbens 15 findet die Zündung zu diesem Zündzeitpunkt statt. In einem Startdrehzahlbereich 38 wird der Zündzeitpunkt nach einer Linie 52 gesteuert. Bei steigender Drehzahl n wird der Zündzeitpunkt ZZP dabei nach "früh" verstellt. Der Startdrehzahlbereich 38 erstreckt sich im Ausführungsbeispiel bis etwa 2000 U/min. An den Startdrehzahlbereich schießt sich ein Leerlaufdrehzahlbereich 39 an. Der Leerlaufdrehzahlbereich 39 kann vorteilhaft im Drehzahlbereich von etwa 1500 U/min bis etwa 4000 U/min liegen. Der Leerlaufdrehzahlbereich 39 liegt unterhalb eines Einkuppeldrehzahlbereichs 40, in dem die Fliehkraftkupplung 20 beginnt einzukuppeln. Der Einkuppeldrehzahlbereich 40 kann sich im Bereich von etwa 3000 U/min bis etwa 6000 U/min erstrecken. Im Ausführungsbeispiel erstreckt sich der Leerlaufdrehzahlbereich 39 von etwa 2000 U/min bis etwa 3500 U/min und der Einkuppeldrehzahlbereich von etwa 4000 U/min bis etwa 5500 U/min.

Im Leerlaufdrehzahlbereich 39 wird der Zündzeitpunkt ZZP anhand einer Leerlaufsteuerung 43 gesteuert, die den Zündzeitpunkt ZZP auf einen festen, frühesten Zündzeitpunkt ZZP1 einstellt. Es kann jedoch auch vorgesehen sein, dass der Zündzeitpunkt ZZP im Leerlaufdrehzahlbereich 39 in Abhängigkeit der Drehzahl n gesteuert wird. Dabei ist insbesondere vorgesehen, dass der Zündzeitpunkt ZZP mit steigender Drehzahl n nach "spät" verstellt wird, wobei die Verstellung insbesondere linear erfolgt. Eine entsprechende Leerlaufsteuerung 44 ist in Fig. 4 mit gestrichelter Linie eingezeichnet.

Der Startvorgang beginnt mit dem Beginn des Anwerfvorgangs, also wenn ein Bediener beginnt, am Anwerfgriff 11 zu ziehen, und endet mit der ersten Verbrennung im Brennraum 29. Bis zur ersten Verbrennung wird der Zündzeitpunkt ZZP anhand der Linie 52 gesteuert. Sinkt die Drehzahl n während des Betriebs aus dem Leerlaufdrehzahlbereich 39 bis in den Startdrehzahlbereich 38, also im Ausführungsbeispiel unter 2000 U/min, so wird der Zündzeitpunkt ZZP in Abhängigkeit der Linie 53 gesteuert. Dabei ist vorgesehen, den Zündzeitpunkt ZZP nach "früh" zu verstellen. Der nach der Linie 53 vorgesehene Zündzeitpunkt ZZP kann dabei auch vor dem frühesten Zündzeitpunkt ZZP1 liegen.

Das Dekompressionsventil 22 dient dazu, den Kompressionsdruck beim Anwerfen des Verbrennungsmotors 7 zu verringern, so dass der Bediener weniger Kraft zum Ziehen des Anwerfgriffs 11 aufwenden muss. Das Dekompressionsventil 22 kann vom Bediener vor dem Starten des Verbrennungsmotors 7 von Hand zu öffnen sein. Es kann jedoch auch vorgesehen sein, dass das Dekompressionsventil 22 automatisch, beispielsweise vor oder beim Betätigen der Anwerfvorrichtung 10 in die geöffnete Stellung gestellt wird. Sobald im Brennraum 29 eine Verbrennung stattfindet, soll das Dekompressionsventil 22 aufgrund des Verbrennungsdrucks schließen.

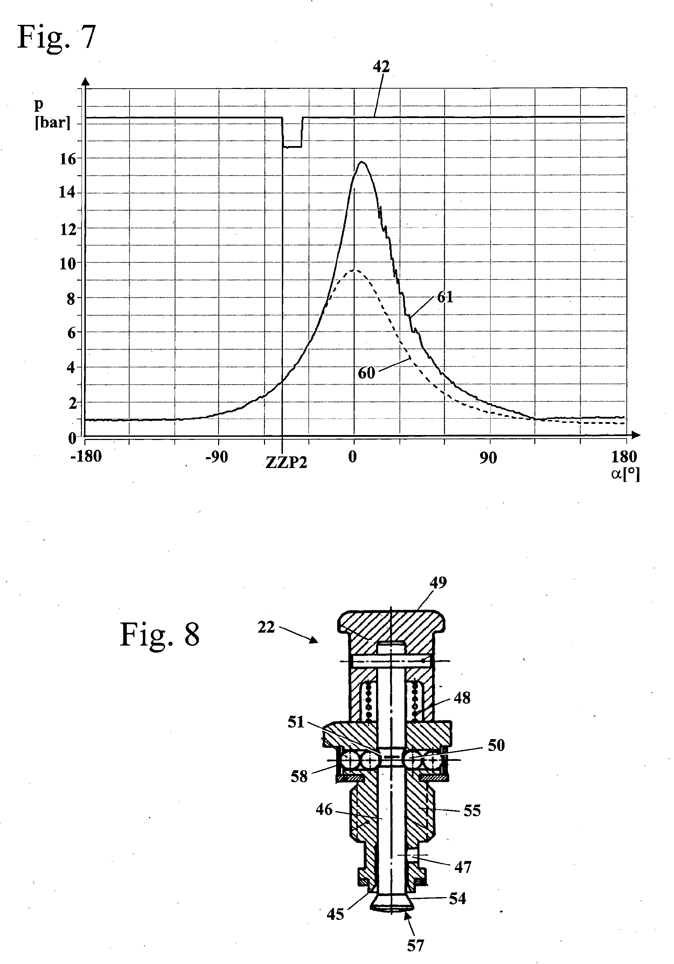

Fig. 8 zeigt exemplarisch einen möglichen Aufbau eines Dekompressionsventils 22. Das Dekompressionsventil 22 besitzt einen Halter 55, der ein Gehäuse bildet und in dem ein Schließelement 46 angeordnet ist. Das Schließelement 46 ist im Ausführungsbeispiel bolzenförmig ausgebildet und besitzt einen Schließabschnitt 54, der im geschlossenen Zustand des Dekompressionsventils 22 mit einem an dem Halter 55 ausgebildeten Ventilsitz 45 zusammenwirkt. In der in Fig. 8 gezeigten, geöffneten Stellung des Dekompressionsventils kann Luft aus dem Brennraum 29 am Außenumfang des Schließelements 46 entlang durch eine im Halter 55 ausgebildete Öffnung 47 in einen Druckentlastungsraum, beispielsweise in die Umgebung, entweichen. Soll die Luft in die Umgebung entweichen, so ist die Öffnung 47 nach außen offen. Der Druckentlastungsraum kann beispielsweise auch der Innenraum des Kurbelgehäuses 28 sein. Soll die Luft in den Innenraum des Kurbelgehäuses 28 entweichen, so kann das Dekompressionsventil 22 über eine in Fig. 3 schematisch eingezeichnete Verbindungsleitung 56 mit dem Innenraum des Kurbelgehäuses 28 verbunden sein.

Das Schließelement 46 ist mit einem Betätigungsknopf 49 verbunden, der vom Bediener zum Öffnen des Dekompressionsventils 22 zu drücken ist. Dabei wird eine Feder 48 komprimiert und Rastkugeln 50 rasten in einer Rastvertiefung 51 des Schließelements 46 ein. An der Stirnseite des Schließelements 46 ist eine Druckfläche 57 gebildet, auf die der Verbrennungsdruck wirkt. Ist der Verbrennungsdruck ausreichend hoch, so reicht die auf die Druckfläche 57 wirkende Kraft aus, um die Rastkugeln 50 aus der Rastvertiefung 51 zu bewegen und entgegen der von einem die Rastkugeln 50 beaufschlagenden Federelement 58 ausgeübten Kraft auszulenken. Dies erfolgt mit Unterstützung der Kraft der Feder 48.

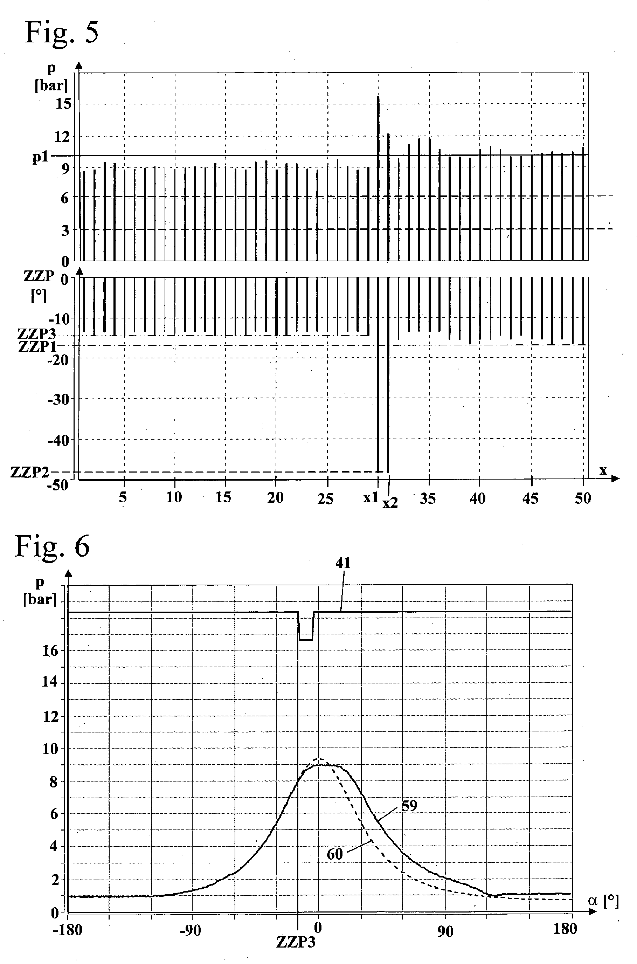

Das Dekompressionsventil 22 muss so ausgelegt sein, dass das Schließelement 46 sicher in der geöffneten Stellung einrastet und dass nach dem Starten des Verbrennungsmotors 7 ein sicheres Schließen des Dekompressionsventils 22 gewährleistet wird. Je nach Verbrennungsmotor 7 kann der Verbrennungsdruck im Brennraum 29 nach dem Startvorgang vergleichsweise niedrig sein. Dies zeigt Fig. 5. In Fig. 5 sind die ersten 50 Motorzyklen x nach dem Starten des Verbrennungsmotors 7, also ab der ersten Verbrennung im Brennraum 29, dargestellt. Wie Fig. 5 zeigt, liegt der Druck p im Brennraum für die ersten 28 Motorzyklen x in der Größenordnung von etwa 9 bar. Der Schließdruck p1 des Dekompressionsventils 22 liegt im Ausführungsbeispiel etwas höher, so dass das Dekompressionsventil 22 geöffnet bleibt. Der Zündzeitpunkt ZZP wird dabei anhand der Drehzahl n gesteuert, und zwar anhand der Leerlaufsteuerung 44 (Fig. 4). Dass der Zündzeitpunkt ZZP anhand der Drehzahl n gesteuert ist, ergibt sich daraus, dass der Zündzeitpunkt ZZP im unteren Diagramm in Fig. 5 nicht konstant ist sondern sich von Motorzyklus zu Motorzyklus geringfügig ändert. Es kann jedoch auch ein konstanter Zündzeitpunkt ZZP vorgesehen sein, beispielsweise wie er durch die Leerlaufsteuerung 43 vorgegeben wird.

Zu einem Motorzyklus x1, der im Ausführungsbeispiel der 30. Motorzyklus nach dem Starten ist, wird der Zündzeitpunkt ZZP von einem Zündzeitpunkt ZZP3 auf einen Schließzündzeitpunkt ZZP2 nach "früh" verstellt. Der Schließzündzeitpunkt ZZP2 liegt vorteilhaft mindestens etwa 5° Kurbelwellenwinkel a, vorzugsweise mindestens etwa 10° Kurbelwellenwinkel a, insbesondere 20° Kurbelwellenwinkel a vor dem frühesten Zündzeitpunkt ZZP1. Der Schließzündzeitpunkt ZZP2 liegt dabei höchstens etwa 40° Kurbelwellenwinkel vor dem frühesten Zündzeitpunkt ZZP1. Im Ausführungsbeispiel liegt der Schließzündzeitpunkt ZZP2 um 30° bis 35° Kurbelwellenwinkel, insbesondere etwa 33° Kurbelwellenwinkel vor dem Zündzeitpunkt ZZP3. Wie Fig. 5 im oberen Teil des Diagramms zeigt, steigt der Druck p im Brennraum 29 dadurch auf über 15 bar, also auf einen Druck deutlich über dem Schließdruck p1 des Dekompressionsventils 22, an. Dadurch wird das Dekompressionsventil 22 geschlossen. Auch im darauffolgenden Motorzyklus x2, der im Ausführungsbeispiel dem 31. Motorzyklus entspricht, erfolgt die Zündung nochmals zum Schließzündzeitpunkt ZZP2. Der sich im Brennraum 29 einstellende Druck p ist zwar niedriger als der zum Motorzyklus x1, jedoch deutlich höher als der Schließdruck p1 des Dekompressionsventils. Das Dekompressionsventil 22 ist nun geschlossen. Ab dem darauffolgenden Motorzyklus x, der im Ausführungsbeispiel der 32. Motorzyklus ist, erfolgt die Zündung wieder zu einem anhand der Leerlaufsteuerung 44 ermittelten Zündzeitpunkt ZZP. Wie Fig. 5 auch zeigt, ist der Druck p im Brennraum 29 nach Schließen des Dekompressionsventils 22 geringfügig höher als vor dem Schließen des Dekompressionsventils 22 und liegt meist oberhalb des Schließdrucks p1. Da im Leerlauf nicht bei jedem Motorzyklus eine Verbrennung stattfinden muss, kann durch das Zünden zum Schließzeitpunkt ZZP2 bei mehr als einem Motorzyklus sichergestellt werden, dass bei mindestens einem Motorzyklus, in dem zum Schließzündzeitpunkt ZZP2 gezündet wurde, eine Verbrennung stattfand.

Der Schließzündzeitpunkt ZZP2 kann ein fester, in der Steuereinrichtung 24 hinterlegter Wert sein. Es kann jedoch auch vorgesehen sein, dass der anhand der Leerlaufsteuerung 44 für diesen oder einen vorangegangenen Motorzyklus x ermittelte Zündzeitpunkt ZZP um einen vorgegebenen Kurbelwellenwinkel α nach "früh" verstellt wird, beispielsweise um etwa 30° bis etwa 35° Kurbelwellenwinkel a. Dabei kann die Steuereinrichtung 24 die Steuerung des Zündzeitpunkts ZZP nach der Leerlaufsteuerung 44 für den mindestens einen Motorzyklus x1, x2, zu dem der Schließzeitpunkt ZZP2 eingestellt wird, aussetzen. Die Steuereinrichtung 24 kann den nach der Leerlaufsteuerung 44 vorgesehenen Zündzeitpunkt ZZP jedoch auch übersteuern, indem der Zündzeitpunkt ZZP zu dem früheren Zeitpunkt ausgelöst wird und für die Auslösung eines Zündfunkens zu dem von der Leerlaufsteuerung 44 vorgesehenen, späteren Zeitpunkt nicht mehr ausreichend Energie zur Auslösung eines Zündfunkens zur Verfügung steht.

Im Ausführungsbeispiel nach Fig. 5 ist vorgesehen, dass der Schließzündzeitpunkt ZZP2 für zwei Motorzyklen eingestellt wird. Die beiden Motorzyklen finden dabei während der ersten 100 Motorzyklen, insbesondere während der ersten 50 Motorzyklen nach dem Startvorgang statt.

Fig. 6 zeigt den Druckverlauf des Drucks p im Brennraum 29 beim Motorzyklus 29. Eine Linie 41 gibt schematisch den Zündzeitpunkt an. Wie Fig. 6 zeigt, steigt der Druck p, der mit einer Linie 59 eingezeichnet ist, nach dem Auslösen des Zündfunkens auf etwa 9 bar an. Die Zündung erfolgt zum Zündzeitpunkt ZZP3, der bei etwa 10° bis etwa 20°, insbesondere bei näherungsweise 15° vor dem oberen Totpunkt des Kolbens 15 liegt. Mit gestrichelter Linie ist in Fig. 6 eine Kompressionskurve 60 ohne Zündung, eine sogenannte Schleppkurve eingezeichnet.

In Fig. 7 ist der Druckverlauf im Brennraum 29 beim auf den 29. Motorzyklus folgenden Motorzyklus x1 mit einer Linie 61 eingezeichnet. Der Zündzeitpunkt ZZP, der schematisch mit einer Linie 42 dargestellt ist, liegt beim Schließzündzeitpunkt ZZP2. Der Schließzündzeitpunkt ZZP2 liegt deutlich früher als der früheste Zündzeitpunkt ZZP1 nach der Leerlaufsteuerung 39 und liegt im Ausführungsbeispiel bei etwa 47° vor dem oberen Totpunkt des Kolbens 15. Aufgrund des sehr frühen Zündzeitpunkts erfolgt eine starke Verbrennung, und der Druck im Brennraum 29 steigt auf einen Wert von über 15 bar an. Da der Druck p deutlich über dem Schließdruck p1 des Dekompressionsventils 22 liegt, wird das Dekompressionsventil 22 geschlossen. Auch in Fig. 7 ist die Vergleichskurve 60 eingezeichnet.

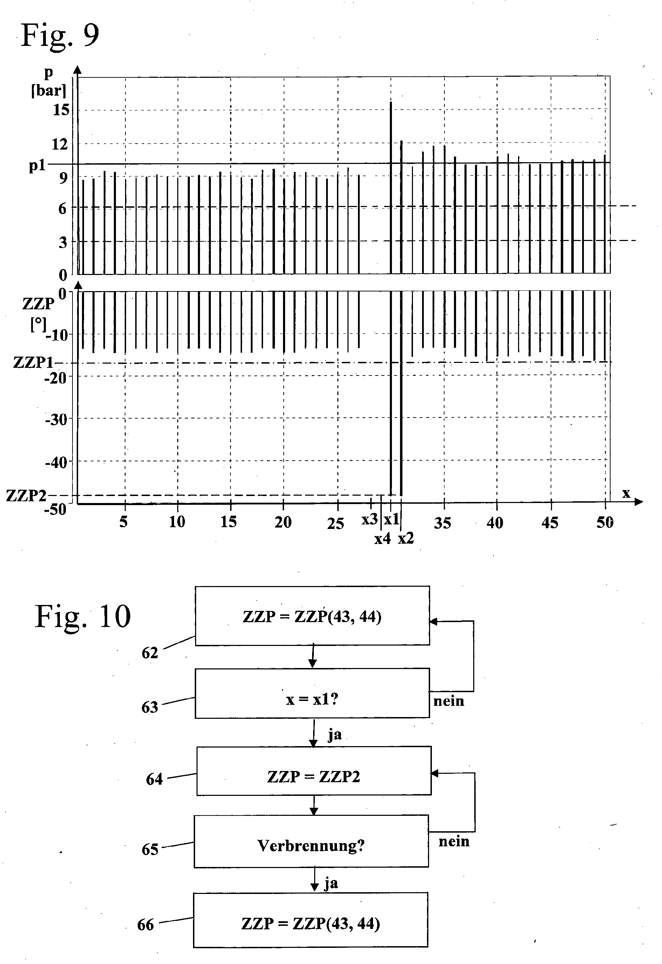

Fig. 9 zeigt ein Ausführungsbeispiel des Verfahrens, bei dem die Zündung bei zwei Motorzyklen x3 und x4 vor den Motorzyklen x1 und x2, zu denen die Zündung auf den Schließzündzeitpunkt ZZP2 verstellt wird, ausgesetzt wird. Dadurch wird sichergestellt, dass zum Motorzyklus x1 der Brennraum 29 gut gespült ist und eine günstige Gemischzusammensetzung im Brennraum 29 gegeben ist, so dass eine Verbrennung im Brennraum 29 erfolgen kann.

Fig. 10 zeigt ein Ablaufdiagramm eines alternativen Verfahrens zum Betrieb des Verbrennungsmotors 7. Der Zündzeitpunkt ZZP wird im Verfahrensschritt 62 anhand der Leerlaufsteuerung 43 oder anhand der Leerlaufsteuerung 44 eingestellt. Im Verfahrensschritt 63 wird überprüft, ob der Motorzyklus x1 bereits erreicht ist. Ist der Motorzyklus x1 noch nicht erreicht, so wird der Zündzeitpunkt ZZP weiterhin im Verfahrensschritt 62 anhand der Leerlaufsteuerung 43 oder 44 gesteuert. Nach Erreichen des Motorzyklus x1 wird der Zündzeitpunkt ZZP auf den Schließzündzeitpunkt ZZP2 verstellt. Anschließend wird im Verfahrensschritt 65 ermittelt, ob eine Verbrennung im Brennraum 29 stattgefunden hat. Dies kann beispielsweise durch Ermittlung der Beschleunigung der Kurbelwelle 17 anhand der Drehzahl n der Kurbelwelle 17 oder durch Ermittlung des Drucks p im Brennraum 29 erfolgen. Hat keine Verbrennung stattgefunden, so wird als Zündzeitpunkt ZZP erneut der Schließzündzeitpunkt ZZP2 eingestellt und überprüft, ob nun eine Verbrennung stattgefunden hat. Sobald eine Verbrennung stattgefunden hat, wird der Zündzeitpunkt ZZP im Verfahrensschritt 66 wieder anhand der Leerlaufsteuerungen 43 oder 44 eingestellt.

## Patentansprüche

1. Verfahren zum Betrieb eines Verbrennungsmotors, wobei der Verbrennungsmotor (7) einen Zylinder (27) besitzt, in dem ein Kolben (15) hin- und hergehend gelagert ist, der eine in einem Kurbelgehäuse (28) drehbar gelagerte Kurbelwelle (17) antreibt, wobei der Kolben (15) einen Brennraum (29) begrenzt, wobei in den Brennraum (29) eine Zündkerze (23) ragt, mit einer Anwerfvorrichtung (10) zum Starten des Verbrennungsmotors (7), wobei die Zündung der Zündkerze (23) zu einem Zündzeitpunkt (ZZP) erfolgt, der von einer Steuereinrichtung (24) gesteuert wird, wobei der Zündzeitpunkt (ZZP) in einem Leerlaufdrehzahlbereich (39) nach einer Leerlaufsteuerung (43, 44) gesteuert wird, die einen frühesten Zündzeitpunkt (ZZP1) besitzt, wobei der Verbrennungsmotor (7) ein Dekompressionsventil (22) besitzt, das in geöffnetem Zustand den Brennraum (29) mit einem Druckentlastungsraum verbindet, wobei das Dekompressionsventil (22) beim Starten des Verbrennungsmotors (7) geöffnet ist und wobei das Dekompressionsventil (22) schließt, wenn der Druck (p) im Brennraum (29) einen Schließdruck (p1) überschreitet,
**dadurch gekennzeichnet, dass** die Zündung im Leerlaufdrehzahlbereich (39) für mindestens einen Motorzyklus (x1, x2) abweichend von der Leerlaufsteuerung (43,44) zu einem Schließzündzeitpunkt (ZZP2) erfolgt, der mindestens etwa 5° Kurbelwellenwinkel (a) vor dem frühesten Zündzeitpunkt (ZZP1) liegt, so dass ein höherer Druck im Brennraum (29) erreicht wird, der zu einem sicheren Schließen des Dekompressionsventils (22) führt.

2. Verfahren nach Anspruch 1,
**dadurch gekennzeichnet, dass** der Schließzündzeitpunkt (ZZP2) um höchstens etwa 40° Kurbelwellenwinkel (α) vor dem frühesten Zündzeitpunkt (ZZP1) liegt.

3. Verfahren nach Anspruch 1 oder 2,
**dadurch gekennzeichnet, dass** der Schließzündzeitpunkt (ZZP2) mindestens etwa 20° Kurbelwellenwinkel (α) vor dem frühesten Zündzeitpunkt (ZZP1) liegt.

4. Verfahren nach einem der Ansprüche 1 bis 3,
**dadurch gekennzeichnet, dass** der Zündzeitpunkt (ZZP) anhand der Leerlaufsteuerung (43, 44) auf 0° bis etwa 20° Kurbelwellenwinkel (α) vor dem oberen Totpunkt bestimmt wird.

5. Verfahren nach einem der Ansprüche 1 bis 4,
**dadurch gekennzeichnet, dass** der Schließzündzeitpunkt (ZZP2) etwa 25° bis etwa 50° Kurbelwellenwinkel (α) vor dem oberen Totpunkt liegt.

6. Verfahren nach einem der Ansprüche 1 bis 5,
**dadurch gekennzeichnet, dass** der mindestens eine Motorzyklus (x1, x2), in dem die Zündung zum Schließzündzeitpunkt (ZZP2) erfolgt, während der ersten 100 Motorzyklen (x), insbesondere während der ersten 50 Motorzyklen (x) nach dem Startvorgang stattfindet.

7. Verfahren nach einem der Ansprüche 1 bis 6,
**dadurch gekennzeichnet, dass** dem mindestens einen Motorzyklus (x1, x2), in dem die Zündung zum Schließzündzeitpunkt (ZZP2) erfolgt, mindestens ein Motorzyklus (x3, x4) vorausgeht, zu dem keine Zündung erfolgt.

8. Verfahren nach einem der Ansprüche 1 bis 7,
**dadurch gekennzeichnet, dass** ermittelt wird, ob nach einem Motorzyklus (x1), in dem die Zündung zum Schließzündzeitpunkt (ZZP2) erfolgt ist, eine Verbrennung im Brennraum (29) erfolgt ist und, falls keine Verbrennung erkannt wird, die Zündung im nächsten Motorzyklus (x2) erneut zum Schließzündzeitpunkt (ZZP2) erfolgt.

9. Verfahren nach einem der Ansprüche 1 bis 8,
**dadurch gekennzeichnet, dass** der Schließzündzeitpunkt (ZZP2) ein fester, in der Steuereinrichtung abgespeicherter Zündzeitpunkt (ZZP) ist.

10. Verfahren nach einem der Ansprüche 1 bis 9,
**dadurch gekennzeichnet, dass** der Schließzündzeitpunkt (ZZP2) ausgehend von einem nach der Leerlaufsteuerung (43, 44) vorgesehenen Zündzeitpunkt (ZZP) ermittelt wird.

11. Verfahren nach einem der Ansprüche 1 bis 10,
**dadurch gekennzeichnet, dass** die Leerlaufsteuerung (43, 44) den Zündzeitpunkt (ZZP) in Abhängigkeit der Drehzahl (n) des Verbrennungsmotors (7) steuert.

12. Verfahren nach einem der Ansprüche 1 bis 11,
**dadurch gekennzeichnet, dass** die Leerlaufsteuerung (43, 44) den Zündzeitpunkt (ZZP) auf einen konstanten Zündzeitpunkt festlegt.

13. Verfahren nach einem der Ansprüche 1 bis 12,
**dadurch gekennzeichnet, dass** der Druckentlastungsraum die Umgebung oder der Innenraum des Kurbelgehäuses (28) ist.

## Claims

1. Method for operating an internal combustion engine, wherein the internal combustion engine (7) has a cylinder (27), in which a piston (15) mounted for reciprocating movement drives a crankshaft (17) rotatably mounted in a crankcase (28), wherein the piston (15) bounds a combustion chamber (29), wherein a spark plug (23) extends into the combustion chamber (29), with a cranking device (10) for starting the internal combustion engine (7), wherein the spark plug (23) is ignited at an ignition point (ZZP) controlled by a control device (24), wherein the ignition point (ZZP) is controlled in an idle speed range (39) in accordance with an idle control system (43, 44) having an earliest ignition point (ZZP), wherein the internal combustion engine (7) has a decompression valve (22), which connects the combustion chamber (29) to a decompression chamber in the open state, wherein the decompression valve (22) is opened at the start of the internal combustion engine (7) and wherein the decompression valve (22) closes if the pressure (p) in the combustion chamber (29) exceeds a closing pressure (p1), **characterised in that** the ignition occurs in the idle speed range (39) for at least one engine cycle (x1, x2), divergently from the idle control system (43, 44), at a closing ignition point (ZZP2) which lies in front of the earliest ignition point (ZZP1) by a crankshaft angle (α) of at least approximately 5°, so that a higher pressure is obtained in the combustion chamber (29), leading to a save closing of the decompression valve (22).

2. Method according to claim 1,
**characterised in that** the closing ignition point (ZZP2) lies in front of the earliest ignition point (ZZP1) by a crankshaft angle (α) of no more than approximately 40°.

3. Method according to claim 1 or 2,
**characterised in that** the closing ignition point (ZZP2) lies in front of the earliest ignition point (ZZP1) by a crankshaft angle (α) of at least approximately 20°.

4. Method according to any of claims 1 to 3,
**characterised in that** the ignition point (ZZP) is defined by means of the idle control system (43, 44) at a crankshaft angle (α) from 0° to approximately 20° before top dead centre.

5. Method according to any of claims 1 to 4,
**characterised in that** the closing ignition point (ZZP2) lies at a crankshaft angle (α) of approximately 25° to approximately 50° before top dead centre.

6. Method according to any of claims 1 to 5,
**characterised in that** the at least one engine cycle (x1, x2) in which ignition occurs at the closing ignition point (ZZP2) occurs during the first 100 engine cycles (x), in particular during the first 50 engine cycles (x), after the starting process.

7. Method according to any of claims 1 to 6,
**characterised in that** the at least one engine cycle (x1, x2) in which ignition occurs at the closing ignition point (ZZP2) is preceded by at least one engine cycle (x3, x4) in which there is no ignition.

8. Method according to any of claims 1 to 7,
**characterised in that** it is detected whether there is a combustion in the combustion chamber (20) after an engine cycle (x1) in which ignition occurs at the closing ignition point (ZZP2), and if no combustion is detected, the ignition once again occurs in the next engine cycle (x2) at the closing ignition point (ZZP2).

9. Method according to any of claims 1 to 8,
**characterised in that** the closing ignition point (ZZP2) is a fixed ignition point (ZZP) stored in the control device.

10. Method according to any of claims 1 to 9,
**characterised in that** the closing ignition point (ZZP2) is determined starting from an ignition point (ZZP) provided in accordance with the idle control system (43, 44).

11. Method according to any of claims 1 to 10,
**characterised in that** the idle control system (43, 44) controls the ignition point (ZZP) as a function of the speed (n) of the internal combustion engine (7).

12. Method according to any of claims 1 to 11,
**characterised in that** the idle control system (43, 44) sets the ignition point (ZZP) to a constant ignition point.

13. Method according to any of claims 1 to 12,
**characterised in that** the decompression chamber is the environment or the interior of the crankcase (28).

## Revendications

1. Procédé pour le fonctionnement d'un moteur à combustion interne, dans lequel le moteur à combustion interne (7) comporte un cylindre (27) dans lequel est monté avec un mouvement de va-et-vient un piston (15) qui entraîne un vilebrequin (17) monté à rotation dans un carter de vilebrequin (28), dans lequel le piston (15) délimite une chambre de combustion (29), dans lequel une bougie (23) dépasse dans la chambre de combustion (29), avec un dispositif de mise en marche (10) pour démarrer le moteur à combustion interne (7), dans lequel l'allumage de la bougie (23) se produit à un point d'allumage (ZZP) qui est commandé par un dispositif de commande (24), dans lequel le point d'allumage (ZZP) est commandé dans une plage de vitesse de ralenti (39) suivant une commande de ralenti (43, 44) qui présente un point d'allumage le plus avancé (ZZP1), dans lequel le moteur à combustion interne (7) comporte une soupape de décompression (22) qui, en position ouverte, relie la chambre de combustion (29) à une chambre de détente, dans lequel la soupape de décompression (22) est ouverte lors du démarrage du moteur à combustion interne (7), et dans lequel la soupape de décompression (22) se ferme si la pression (p) dans la chambre de combustion (29) dépasse une pression de fermeture (p1),
**caractérisé en ce que** l'allumage dans la plage de vitesse de ralenti (39) se produit pour au moins un cycle de moteur (x1, x2), en dérogeant à la commande de ralenti (43, 44), à un point d'allumage de fermeture (ZZP2) qui est situé à un angle de vilebrequin (a) d'au moins environ 5° avant le point d'allumage le plus avancé (ZZP1), de sorte qu'on atteint dans la chambre de combustion (29) une pression plus élevée qui entraîne une fermeture sûre de la soupape de décompression (22).

2. Procédé selon la revendication 1,
**caractérisé en ce que** le point d'allumage de fermeture (ZZP2) est situé avant le point d'allumage le plus avancé (ZZP1) d'un angle de vilebrequin (α) d'environ 40° au maximum.

3. Procédé selon la revendication 1 ou 2,
**caractérisé en ce que** le point d'allumage de fermeture (ZZP2) est situé avant le point d'allumage le plus avancé (ZZP1) d'un angle de vilebrequin (α) d'environ 20° au minimum.

4. Procédé selon l'une des revendications 1 à 3,
**caractérisé en ce que** le point d'allumage (ZZP) est défini à l'aide de la commande de ralenti (43, 44) à l'aide d'un angle de vilebrequin (α) de 0° à environ 20°.

5. Procédé selon l'une des revendications 1 à 4,
**caractérisé en ce que** le point d'allumage de fermeture (ZZP2) est situé avant le point mort haut d'un angle de vilebrequin (α) d'environ 25° à environ 50°.

6. Procédé selon l'une des revendications 1 à 5,
**caractérisé en ce que** le au moins un cycle de moteur (x1, x2) dans lequel se produit l'allumage au point d'allumage de fermeture (ZZP2) a lieu pendant les 100 premiers cycles de moteur (x), en particulier pendant les 50 premiers cycles de moteur (x) après le démarrage.

7. Procédé selon l'une des revendications 1 à 6,
**caractérisé en ce que** le au moins un cycle de moteur (x1, x2) dans lequel a lieu l'allumage au point d'allumage de fermeture (ZZP2) est précédé d'au moins un cycle de moteur (x3, x4) dans lequel aucun allumage ne se produit.

8. Procédé selon l'une des revendications 1 à 7,
**caractérisé en ce qu'**on détermine si, après un cycle de moteur (x1) dans lequel l'allumage s'est produit au point d'allumage de fermeture (ZZP2), une combustion s'est produite dans la chambre de combustion (29), et au cas où aucune combustion n'est détectée, l'allumage dans le cycle de moteur suivant (x2) se produit à nouveau au point d'allumage de fermeture (ZZP2).

9. Procédé selon l'une des revendications 1 à 8,
**caractérisé en ce que** le point d'allumage de fermeture (ZZP2) est un point d'allumage (ZZP) fixe stocké dans le dispositif de commande.

10. Procédé selon l'une des revendications 1 à 9,
**caractérisé en ce que** le point d'allumage de fermeture (ZZP2) est déterminé à partir d'un point d'allumage (ZZP) prévu suivant la commande de ralenti (43, 44).

11. Procédé selon l'une des revendications 1 à 10,
**caractérisé en ce que** la commande de ralenti (43, 44) commande le point d'allumage (ZZP) en fonction de la vitesse (n) du moteur à combustion interne (7).

12. Procédé selon l'une des revendications 1 à 11,
**caractérisé en ce que** la commande de ralenti (43, 44) fixe le point d'allumage (ZZP) à un point d'allumage constant.

13. Procédé selon l'une des revendications 1 à 12,
**caractérisé en ce que** la chambre de détente est l'environnement ou l'espace intérieur du carter de vilebrequin (28).
